# EUROPEAN PATENT APPLICATION

(11) **EP 2 093 033 A2**
(43) Date of publication of application: **26.08.2009**
(21) Application number: 09001744.3
(22) Date of filing: 07.02.2009
(51) Int. Cl.: B28B 3/00

(54) **Method for treating catalyzed hydraulic mixtures containing industrial slags and aggregates for making non polluting articles and the articles made thereby**

(30) Priority: 08.02.2008 IT CO20080003
(71) Applicant: Pescale S.p.A., 42014 Castellarano (RE) (IT); S.M.I.A. S.r.l., 00197 Roma (IT)
(72) Inventor: The designation of the inventor has not yet been filed
(74) Representative: Zanella, Ireneo

(57) **Abstract**

Method for treating catalyzed hydraulic mixtures containing known industrial slags and aggregates for making non polluting manufactured articles which can be freely stocked, comprising the following phases:
a) a shaping phase of the respective mixture in blocks having a regular or irregular geometrical form, for example a parallelepipedic form, a plate-like form or similar,
b) a pressing phase of said blocks under a high pressure which is equal to or higher than the working pressure of road rollers by the construction of roads, and
c) a block curing phase of, for example, about 60 days.

The obtained manufactured articles can be used in their actual form, that is for the building of walls and masonries, for forming foundations or yard floorings, for building temporary or final embankments, as for example artificial reefs. The obtained manufactured articles can also be crushed and utilized as inert materials as replacement of the natural or quarry aggregates.

## Description

### Description of the invention

### Field of the Invention

The present invention relates to a method for treating catalyzed hydraulic mixtures containing industrial slags and aggregates, that is inert materials for making non polluting manufactured articles, and to the manufactured articles made thereby, according to the preambles of claims 1 and 3, respectively.

### Background of the invention

As is known, in the metallurgic field of ferrous and non ferrous minerals, such as zinc and lead, great amounts of highly polluting industrial slags are produced.

Because of severe anti-polluting regulations related to the disposal of said slags or ashes the search of new disposable sites for disposing therein said industrial slags is necessary.

Actually to partially dispose of said industrial slags by incorporating said slags in mixtures with quarry aggregates or inert materials, and related catalyzers, which mixtures are then mixed with water to produce agglomerates for making articles of manufacture, such as, for example, road and railroad embankments and upperworks, yard floorings and the like have been devised.

These hydraulic catalyzed conglomerates are also broadly used and specified in operating specifications for the Italian road and railway companies ANAS and FFSS.

While prior hydraulic catalyzed conglomerates have good geotechnic and performance characteristics, they, on the other hand, have several drawbacks and disadvantages.

It is also known that all the municipal administrations continuously search through their urban areas new places for disposing building demolition rubbles or debris, at present produced in great amounts, which in Italy, for example, are of the order of several millions tons/year.

A solution of the above mentioned problems is set forth in the document IT-A-1.313.077 which discloses catalyzed hydraulic mixtures containing industrial slags and aggregates for making non polluting manufactured articles in the form of manufactured articles obtained "by casting", that is similar to a concrete casting, as known, for example, for making road and railroad embankments and upperworks, yard floorings, road foundation and the like.

Further details are inferable from said document IT-A-1.313.077 which is here incorporated for reference purposes.

Even if the catalyzed hydraulic mixtures which may be obtained according to said document and similar allow the production of optimum articles of manufacture said catalyzed hydraulic mixtures present some drawbacks.

On the one hand said known catalyzed hydraulic mixtures after the preparation thereof have to be utilized within a temporal range of about 10 to 12 days, which hinders a long stocking thereof, as on the contrary whished. On the other hand said known mixtures are only provided for the use by a casting process.

### Summary of the invention

Thus, the aim of the present invention is to provide a method for treating the known catalyzed hydraulic mixtures containing industrial slags and aggregates or inert materials for making non polluting manufactured articles as well as the manufactured articles made thereby, which method allows to enlarge the use fields of said mixtures and to obtain manufactured articles/products which may be stocked at will and may be utilized both in their actual form as well as as crushed aggregates.

The above aim is achieved, according to the invention, by treated mixtures and articles of manufacture made thereby, having the characterizing features of claims 1 and 3, respectively.

Further advantageous developments and compositions are disclosed in the dependent claims.

The treated mixtures and manufactured articles according to the invention provide a lot of important advantages.

The teaching according to the invention to shape the mentioned known mixtures in the form of blocks and to press said blocks under a high pressure which is equal to or higher than the working pressure of road rollers by the construction of roads, and the subsequent material curing phase allows the obtaining of a compact lithoidic product, that is a product having the components thereof which are closely blocked so that the obtained products/blocks represent an inert product which, on the one hand, may be used in its actual form, for example for building reinforcement walls, partition walls, yard floorings, pavements, temporary or final embankments or dams, artificial reefs, so called "cake bloks" or traffic delimiting blocks and so on and, on the other hand, alternatively said blocks can be preliminary crushed in known crushing plants and then size selected and utilized as aggregates in the actual typical uses thereof.

A further advantage is to be seen in the fact that the known mixtures, after the treatment thereof according the present invention, may be transformed in aggregates or inert products which may be stocked for long periods at will.

Another important advantage is that the treatment method according to the invention may be carried out by means of known equipments and plants and with low working costs.

Further characteristics, details and advantages of the mixtures treated according to the invention and the manufactured articles made thereby will become more apparent hereinafter from the following exemplary disclosure.

Even if the preparation of the known catalyzed hydraulic mixtures which are suitable for the production of non polluting manufactured articles is inferable, for example, from the mentioned document IT-A-1.313.077 several examples of the composition of said mixtures are set forth in the following.

### Exemple 1

In the catalyzed hydraulic mixtures containing industrial slags and inert materials for making non polluting articles of manufacture
a) said inert materials consist of reclaimed aggregates deriving from building demolition debris,
b) the industrial slags comprise:
   b1) metallurgic slags deriving from the ore dressing for the extraction of ferrous or non ferrous materials, such as lead and zinc,
   b2) blast furnace slags deriving from blast furnaces of the metallurgic industry and/or ashes deriving from the coal combustion in thermoelectric power systems;
c) the catalyzers are effective to provide, in the presence of water, a basic environment having a ph of at least 11,
wherein by recrystalizing the hydrate salts forming said slags in presence of said time-held basic environment and of a lime matrix material supplied by said demolition debris takes place a confinement of the pollutants of said metallurgic slags.

### Example 2

Catalyzed hydraulic mixtures having the following composition:
a) demolition debris, granulometry 0,005 - 15 mm, volume rate of 30%,
b) blast furnace slag, granulometry 0,1 - 1,0 mm, volume rate of 12%,
c) slags deriving from the ore dressing for the extraction of iron, granulometry 0,05 - 30 mm, volume rate of 57%,
d) catalyzers: basic catalyzers in powder form (for example calcium sulphate, lime, sodium carbonate), volume rate of 0,6%; 50% water diluted basic catalyzers (for example sodium carbonate), volume rate of 0,4 %.

### Example 3

Catalyzed hydraulic mixtures having the following composition:
a) demolition debris, granulometry 0,1 - 15 mm, volume rate of 50%,
b) blast furnace slag, granulometry 0,1 - 1,0 mm, volume rate of 10%,
c) slags deriving from the ore dressing for the extraction of lead, granulometry 0,05 - 1,0 mm, volume rate of 39%,
d) basic catalyzers in powder form (for example calcium sulphate, lime, sodium carbonate), volume rate of 1,0%.

### Example 4

Catalyzed hydraulic mixtures having the following composition:
a) demolition debris, granulometry 0,05 - 15 mm, volume rate of 30%,
b) blast furnace slag, granulometry 0,1 - 3 mm, volume rate of 19%,
c) slags deriving from the ore dressing for the extraction of iron, granulometry 0,05 - 30 mm, volume rate of 50%,
d) catalyzers: basic catalyzers in powder form (for example calcium sulphate, lime), volume rate of 0,3%; 50% water diluted basic catalyzers (for example sodium carbonate), volume rate of 0,7 %.

Starting from known catalyzed hydraulic mixtures for making non polluting manufactured articles, for example of the type shown in the above mentioned examples, or having another suitable composition, said mixtures are treated, according to the present invention, with the following method phases:
a) a shaping phase of the respective mixture in blocks having a regular or irregular geometrical form, for example a parallelepipedic form, a plate-like form or similar,
b) a pressing phase of said blocks under a high pressure which is equal to or higher than the working pressure of road rollers by the construction of roads, and
c) a blocks curing phase of, for example, about 60 days.

Said compression phase may take place, for example, in a press having movable walls, wherein said blocks may indifferently have a regular or an irregular form.

In the case of blocks having a parallelepipedic form they may be utilized, as the known similar manufactured articles, for building walls and masonries. Said articles may also been provided in the form of modular plates, which may be utilized for forming foundations, yard floorings and the like or in the form of the so-called removable "cake blocks" used for traffic delimitation purposes.

In the case of irregular forms, as for example in the case of blocks having finger-like projections, that is the so-called "hand-like" blocks, they may be used for building temporary or final embankments or dams, for example in the case of artificial reefs.

According to an important aspect of the invention the produced blocks after the curing thereof may also be fed to a crushing plant for producing crushed fractions having the desired particle size or granulometry which fractions can then be freely stocked and utilized, for example, for different uses as alternative to the more expensive natural or quarry aggregates.

## Claims

1. Method for treating catalyzed hydraulic mixtures containing industrial slags and aggregates for making non polluting manufactured articles, as disclosed for example in the document IT-A- 1.313.077, or the like,
**characterized in that** it comprises the following phases:
a) a shaping phase of the respective mixture in blocks having a regular or irregular geometrical form, for example a parallelepipedic form, a plate-like form or similar,
b) a pressing phase of said blocks under a high pressure which is equal to or higher than the working pressure of road rollers by the construction of roads, and
c) a block curing phase of, for example, about 60 days.

2. Method according to claim 1, **characterized in that** said pressing phase is carried out, for example, in a press having movable walls.

3. Manufactured articles in form of blocks/bodies having a geometrically regular or irregular shape, **characterized in that** said articles are made starting from catalyzed hydraulic mixtures for making non polluting manufactured articles, treated according to the method of claim 1.

4. Use of papallelepipedic, plate-like or similar blocks having a geometrically regular form, according to claim 3, for building walls and masonries, as well as for making foundations, yard floorings and the like.

5. Use of blocks having a geometrically irregular form, according to claim 3, for building temporary or final embankments or dams as for example artificial reefs.
